# FASCICULE DE BREVET EUROPEEN

(11) **EP 4 211 038 B1**
(45) Date de publication et mention de la délivrance du brevet: **28.05.2025**
(21) Numéro de dépôt: 21777443.9
(22) Date de dépôt: 09.09.2021
(51) Int. Cl.: B64C 25/26, B64C 25/24

(54) **DISPOSITIF D'ACTIONNEMENT D'ATTERRISSEUR A MOTEUR DOUBLE-ETOILE**
FAHRWERKBETÄTIGUNGSVORRICHTUNG MIT DOPPELSTERNMOTOR
LANDING GEAR ACTUATING DEVICE WITH DOUBLE-STAR MOTOR

(30) Priorité: 10.09.2020 FR 2009185
(43) Date de publication de la demande: 19.07.2023
(73) Titulaire: Safran Landing Systems, 78140 Vélizy-Villacoublay (FR)
(72) Inventeur: ATTIVI, Foly Selom Marius, 77550 MOISSY-CRAMAYEL (FR); LEYNAERT, François-Noel, 77550 MOISSY-CRAMAYEL (FR); COUSTENOBLE, Steve, 77550 MOISSY-CRAMAYEL (FR)
(74) Mandataire: Cabinet Boettcher
(86) Numéro de dépôt international: PCT/EP2021/074863
(87) Numéro de publication internationale: WO 2022/053583

(56) Documents cités:
- GB-A- 465 882
- US-A- 2 375 422
- US-A1- 2018 208 299
- US-A1- 2020 056 686
- US-A1- 2020 189 726

## Description

La présente invention concerne le domaine de l'aéronautique et plus particulièrement les atterrisseurs d'aéronef.

### ARRIERE PLAN DE L'INVENTION

Un atterrisseur comprend généralement une jambe ayant une extrémité reliée par une articulation à une structure de l'aéronef et une extrémité inférieure pourvue d'un axe portant au moins une roue. L'articulation autorise un pivotement de la jambe entre une position sortie dans laquelle la jambe déployée peut supporter l'aéronef lors des phases d'atterrissage, décollage et roulage, et une position rentrée dans laquelle la jambe est escamotée dans la soute de train pour les phases de vol.

La manœuvre de la jambe entre ses deux positions est assurée par un actionneur. L'actionneur de manœuvre de la jambe appartient à un dispositif d'actionnement comprenant en outre un actionneur de verrouillage/déverrouillage de la jambe dans chacune de ses positions et un actionneur du panneau de fermeture de la soute. Les actionneurs hydrauliques, qui étaient classiquement utilisés, sont désormais remplacés par des actionneurs électrohydrauliques ou électromécaniques. Le dispositif d'actionnement comprend une unité de commande reliée aux actionneurs pour en assurer la commande de manière synchronisée et est classiquement agencé pour autoriser également un déploiement gravitaire de la jambe consistant à laisser la jambe passer de la position rentrée à la position sortie sous son propre poids.

Dans le cas d'un actionneur comprenant un moteur électrique, il est prévu un circuit de freinage pour ralentir le mouvement de la jambe lors d'un déploiement gravitaire et éviter que la jambe arrive violemment en butée en position sortie. Le circuit de freinage exploite l'énergie engendrée par le moteur électrique dont le rotor est entraîné en rotation par la jambe se déplaçant vers la position sortie sous son propre poids. Le circuit de freinage comprend à cet effet une batterie rechargée par l'énergie produite par le moteur ou une ou plusieurs résistances.

Il est évident que les dispositifs d'actionnement des atterrisseurs doivent fonctionner de manière fiable afin de garantir la sécurité des passagers des aéronefs qu'ils équipent. Cette contrainte de fiabilité s'ajoute à des contraintes pesant sur le poids et l'encombrement de l'atterrisseur qui doivent être les plus petits possibles. Le document US-A-2018208299 décrit un dispositif d'actionnement d'un atterrisseur comprenant un moteur triphasé comprenant deux enroulements reliés chacun à une ligne de commande.

Le document US-A-2020189726 décrit un dispositif d'actionnement d'atterrisseur comprenant un moteur électrique de type « Harmonic Drive » utilisé pour ralentir la sortie de l'atterrisseur.

Dans un tout autre domaine, le document GB-A-465882 décrit un dispositif indicateur à aiguille comprenant un organe de recopie de position comportant deux stators triphasés bobinés en étoile et deux rotors monophasés.

### OBJET DE L'INVENTION

L'invention a notamment pour but de fournir un dispositif d'actionnement d'atterrisseur satisfaisant au moins en partie aux contraintes ci-dessus.

### RESUME DE L'INVENTION

A cet effet, on prévoit, selon l'invention un dispositif d'actionnement d'une jambe d'atterrisseur d'aéronef, comprenant un ensemble électronique de commande et un actionneur comprenant un moteur électrique relié à l'ensemble de commande, le dispositif étant agencé pour autoriser également un déploiement gravitaire de la jambe. Le moteur comprend un stator ayant au moins un premier enroulement triphasé à couplage en étoile et un deuxième enroulement triphasés à couplage en étoile. L'ensemble électronique de commande comprend une première ligne de commande reliée au premier enroulement et une deuxième ligne de commande reliée au deuxième enroulement. Chaque ligne de commande comprend une unité de commande pour élaborer une instruction de commande de haut niveau, une unité de pilotage pour élaborer une instruction de pilotage de bas niveau à partir de l'instruction de commande de haut niveau, et au moins un circuit de freinage pour freiner le moteur lors du déploiement gravitaire de la jambe en exploitant une énergie produite par le moteur. Le dispositif est agencé pour utiliser les lignes de commande en fonction d'une disponibilité des composants de chaque ligne et de performances recherchées.

Ainsi, l'actionnement est réalisé par un unique moteur triphasé couplé en double étoile dont les deux enroulements sont raccordés chacun à une ligne de commande permettant à la fois la manœuvre commandée de la jambe et son freinage lors d'un déploiement gravitaire. Un composant disponible est un composant qui n'est pas défaillant, c'est-à-dire un composant en état d'assurer sa fonction avec les performances prévues. Une défaillance d'un composant de l'une des lignes de commande ou de l'un des enroulements n'empêche donc pas le fonctionnement de l'atterrisseur. L'invention possède donc une structure compacte mais néanmoins redondante autorisant une reconfiguration du dispositif en cas de défaillance d'un des composants.

Selon une première caractéristique particulière, au moins une des unités de pilotage est agencée pour gérer le déploiement gravitaire.

Les unités de pilotage mettent en œuvre des boucles relativement rapides autorisant un temps de réaction relativement faible pour la mise en œuvre du déploiement gravitaire.

Selon une deuxième caractéristique particulière, chaque ligne de commande comprend une pluralité de circuits de freinage sélectivement activables en fonction de l'énergie produite par le moteur lors du déploiement gravitaire de la jambe. Ces circuits de freinage sont sélectionnables en fonction :
1) de l'énergie produite en fonction de la position du train ;
2) et de l'état, des lignes de pilotage, des lignes de commandes et du moteur double étoile.

Les profils de couple et de vitesse en fonction de la position du train peuvent différer pour chaque ligne de pilotage.

Il est ainsi possible d'avoir plusieurs niveaux de freinage en fonction du ou des circuits de freinage activés.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
- la figure 1 est une vue schématique d'un atterrisseur selon l'invention ;
- la figure 2 est un schéma illustrant l'architecture un dispositif d'actionnement selon l'invention dans une configuration maximale ;
- la figure 3 est un schéma illustrant un dispositif selon un mode de réalisation particulier de l'invention.

### DESCRIPTION DETAILLEE DE L'INVENTION

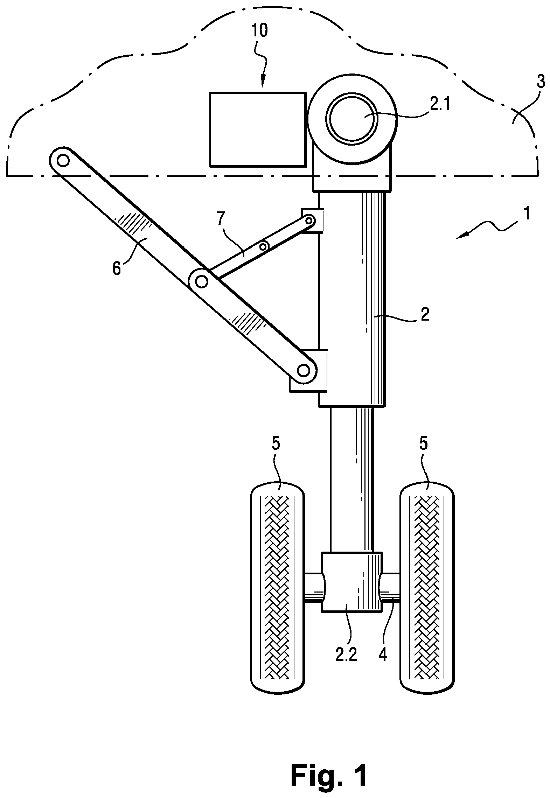

En référence à la figure 1, l'atterrisseur selon l'invention, généralement désigné en 1, comprend une jambe 2 ayant une extrémité 2.1 destinée à être reliée par une articulation à la structure 3 d'un aéronef et une extrémité 2.2 opposée pourvue d'un axe 4 portant ici une paire de roues 5. La jambe 2 est mobile entre une position sortie (représentée sur la figure) et une position rentrée et est stabilisée en position sortie par une contrefiche principale 6 maintenue alignée par une contrefiche de verrouillage 7. La structure mécanique de l'atterrisseur 1 étant classique, elle ne sera pas plus détaillée ici et ce d'autant plus que l'invention est applicable à tous les types de train d'atterrissage rentrant.

L'atterrisseur 1 comprend en outre un dispositif d'actionnement 10 qui est agencé pour manœuvrer la jambe 2 entre sa position rentrée et sa position sortie et pour autoriser également un déplacement gravitaire de la jambe 2 de sa position rentrée jusqu'à sa position sortie en cas de défaillance du dispositif d'actionnement.

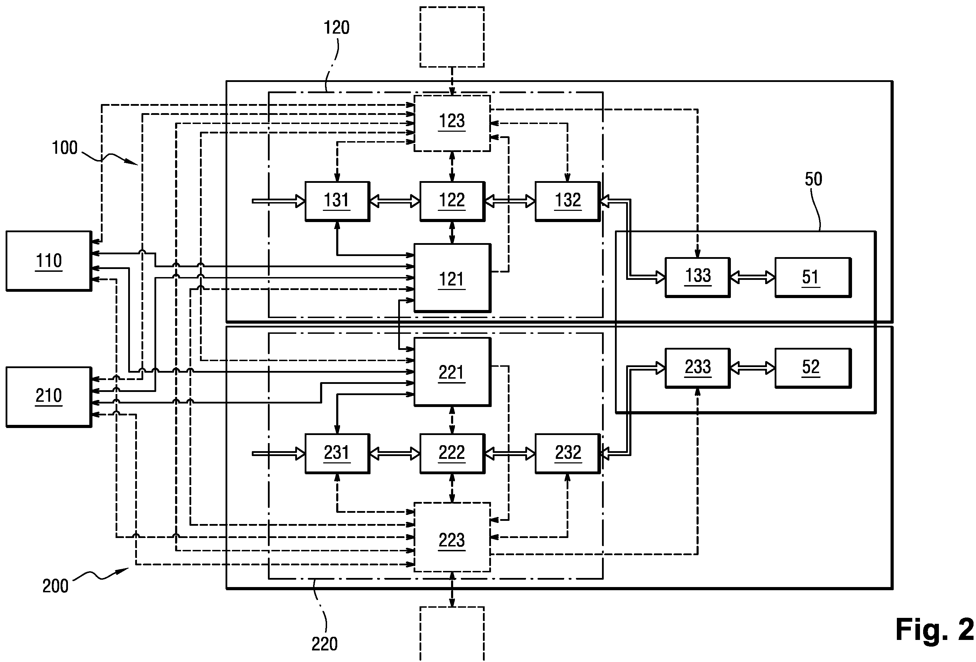

Le dispositif d'actionnement 10, représenté sur la figure 2 avec un grand nombre d'options, comporte un ensemble de commande et un actionneur de manœuvre de la jambe 2.

L'actionneur de manœuvre comprend un moteur électrique 50 de type double étoile. Plus précisément, le moteur électrique 50 est de type synchrone et comprend un rotor entouré par un stator comportant un premier enroulement triphasé 51 à couplage en étoile et un deuxième enroulement triphasé 52 à couplage en étoile. A chaque enroulement triphasé 51, 52 est associé un capteur de position du rotor.

L'ensemble de commande comprend une première ligne de commande, généralement désignée en 100, reliée au premier enroulement triphasé 51 et une deuxième ligne de commande, généralement désignée en 200, reliée au deuxième enroulement triphasé 52.

Chacune des lignes de commande 100, 200 comprend :
- une unité électronique de commande 110, 210 pour élaborer une instruction de commande de haut niveau (on parle couramment d'unité système dans ce cas) ;
- une unité électronique de pilotage 120, 220 pour élaborer une instruction de pilotage de bas niveau à partir de l'instruction de commande de haut niveau (on parle couramment d'unité sous-système dans ce cas) ;
- trois circuits de freinage 131, 132, 133, 231, 232, 233 pour freiner le moteur électrique 50 lors du déploiement gravitaire de la jambe 2 en exploitant une énergie produite par le moteur électrique 50.

L'unité électronique de commande 110, 210 est un calculateur informatique destiné à être raccordé à un poste de pilotage de l'aéronef qui lui transmet une commande de déploiement de la jambe 2 (déplacement de la jambe 2 vers la position sortie) ou une commande de rétraction de la jambe 2 (déplacement de la jambe 2 vers la position rentrée). L'unité électronique de commande 110, 210 est agencée pour élaborer une commande de haut niveau (consigne) correspondant à l'instruction de déploiement ou de rétraction reçue et met en œuvre une boucle de rétroaction lente pour adapter la commande de haut niveau par exemple en fonction de la position de la jambe 2.

L'unité électronique de pilotage 120, 220 comprend un circuit de commande 121, 221 et un circuit de puissance 122, 222 sous la forme d'un onduleur piloté par le circuit de commande 121, 221 pour alimenter le moteur 50. Le circuit de commande 121, 221 est un calculateur relié à l'unité électronique de commande 110, 210 et agencé pour élaborer une commande de bas niveau en fonction de la commande de haut niveau qui lui a été transmise par l'unité électronique de commande 110, 210. La commande de bas niveau est un signal de pilotage du circuit de puissance 122, 222 et le circuit de commande 121, 221 met en œuvre une boucle de rétroaction rapide pour adapter le signal de pilotage par exemple en fonction de paramètres électriques de l'enroulement triphasé 51, 52 (tension, intensité) ou en fonction de la vitesse du rotor.

L'unité électronique de pilotage 120, 220 comprend en outre une unité de surveillance/monitoring 123, 223 qui comprend un calculateur relié à des capteurs collectant des paramètres de fonctionnement des différents composants de l'atterrisseur.

Le circuit de commande 121 (respectivement 221) est agencé pour exécuter les fonctions suivantes :
- commande de l'onduleur du circuit de puissance 122 (respectivement 222), et donc de l'enroulement 51 (respectivement 52) du moteur électrique double étoile 50 ;
- pilotage des circuits de freinage 131, 132, 133 (respectivement 231, 232, 233).

L'unité de surveillance/monitoring 123 (respectivement 223) est agencée pour effectuer un monitoring de l'unité de pilotage 120 (respectivement 220), du moteur électrique 50, de la ligne de commande 100 (respectivement 200), et de l'unité de commande 110 (respectivement 210).

Le premier circuit de freinage 131, 231 est ici représenté intercalé entre le réseau haute tension de l'aéronef et le circuit de puissance 122, 222. Le deuxième circuit de freinage 132, 232 et le troisième circuit de freinage 133, 233 sont ici disposés en série entre le circuit de puissance 122, 222 et le moteur 50. Le troisième circuit de freinage 133, 233 est plus précisément déporté sur le moteur 50. Les circuits de freinage peuvent être tous du même type ou de types différents ; ils peuvent avoir la même capacité de freinage ou des capacités de freinage différentes. Par exemple, les circuits de freinage 131, 132, 231, 232 comprennent une batterie rechargeable pour récupérer l'énergie produite par le moteur électrique 50 lors d'un déploiement gravitaire ou des résistances pour dissiper l'énergie produite par le moteur électrique 50 lors d'un déploiement gravitaire. Les circuits de freinage 133, 233 sont ici agencés à partir de composants de puissance placés sur des parties thermiquement conductrices du moteur pour utiliser celles-ci comme un radiateur et dissiper thermiquement l'énergie produite par le moteur électrique 50 lors d'un déploiement gravitaire. Chaque circuit de freinage est par exemple relié à la ligne de commande via des commutateurs permettant de court-circuiter le circuit de freinage en question autorisant une activation ou une désactivation dudit circuit de freinage. Les commutateurs sont ici pilotés par l'unité électronique de commande 110, 210.

Plus précisément :
- le premier circuit de freinage 131 (respectivement 231) est placé entre le bus haute tension continu et l'onduleur du circuit de puissance 122 (respectivement 222). Physiquement, le premier circuit de freinage peut être situé à l'intérieur ou à l'extérieur, à proximité immédiate, de l'unité de pilotage 120 (respectivement 220).
- le deuxième circuit de freinage 132 (respectivement 232) est placé entre l'onduleur du circuit de puissance 122 (respectivement 222) et le premier enroulement 51 (respectivement le deuxième enroulement 52) du moteur double étoile 50. Physiquement, le deuxième circuit de freinage peut être situé à l'intérieur ou à l'extérieur, à proximité immédiate, de l'unité de pilotage 120 (respectivement 220).
- le troisième circuit de freinage 133 (respectivement 233) est placé entre le faisceau de puissance du premier enroulement 51 (respectivement le faisceau de puissance du deuxième enroulement 52) et le premier enroulement 51 (respectivement le deuxième enroulement 52). Physiquement, ces circuits de freinage peuvent être situés à l'intérieur ou à l'extérieur, à proximité immédiate, du premier enroulement 51, ou du deuxième enroulement 52, ou de l'ensemble moteur double étoile 50.

Le pilotage des circuits de freinage est assuré par les commutateurs et les unités électroniques de commande 110, 210.
a) Les commutateurs sont pilotés:
   * soit directement par l'unité de surveillance/monitoring 123 ou le circuit de commande 121 (respectivement 223, 221),
   * soit les circuits de freinage 131, 132, 133 (respectivement 231, 232, 233) contiennent des dispositifs électroniques leur permettant de surveiller l'évolution des courants/tensions, images de l'évolution couple/vitesse du train, et ainsi, de déclencher de façon autonome les dits commutateurs.
b) L'unité électronique de commande 110, 210 est agencée pour décider indépendamment d'activer la fonction circuit de freinage en envoyant l'ordre de commande correspondant à l'unité électronique de pilotage 120, 220 qui se chargera de piloter le circuit de freinage approprié, en fonction de l'état de l'électronique de contrôle, des faisceaux, et du moteur double étoile. On notera que le système est agencé de telle manière qu'un ordre de commande du circuit de freinage soit prioritaire sur un ordre de commande du moteur.

On notera que tous les composants des lignes de commande 100, 200 sont connus en eux-mêmes de sorte que leurs structures et leurs modes de fonctionnement ne sont pas décrits ici dans le détail.

Le dispositif est agencé pour utiliser les lignes de commande 100, 200 en fonction d'une disponibilité des composants de chaque ligne de commande 100, 200.

Par exemple :
- en cas de défaillance du premier enroulement 51, le freinage peut être assuré par l'activation du circuit de freinage 231, ou du circuit de freinage 232, ou des deux circuits de freinage 231, 232 (en variante, on peut également faire intervenir le circuit de freinage 233) ;
- en cas de défaillance de la première ligne de commande 100 ou du faisceau électrique du premier enroulement du moteur 50, le freinage peut être assuré par l'activation du circuit de freinage 231, ou du circuit de freinage 232, ou des deux circuits de freinage 231, 232, ou du circuit de freinage 133 (en variante, on peut également faire intervenir le circuit de freinage 233) ;
- en cas de défaillance de l'un des composants 121, 122, 123, 131 de l'unité électronique de pilotage 120 ou du capteur de position du rotor, le freinage peut être assuré par l'activation du circuit de freinage 132, ou du circuit de freinage 133, ou des deux circuits de freinage 132, 133, du circuit de freinage 231, ou du circuit de freinage 232, ou des deux circuits de freinage 231, 232 (en variante, on peut également faire intervenir le circuit de freinage 233) ;
- en cas de défaillance du deuxième enroulement 52, le freinage peut être assuré par l'activation du circuit de freinage 131, ou du circuit de freinage 132, ou des deux circuits de freinage 131, 132 (en variante, on peut également faire intervenir le circuit de freinage 133) ;
- en cas de défaillance de la liaison de la deuxième ligne de commande 200 avec le moteur 50, le freinage peut être assuré par l'activation du circuit de freinage 131, ou du circuit de freinage 132, ou des deux circuits de freinage 131, 132, ou du circuit de freinage 233 (en variante, on peut également faire intervenir le circuit de freinage 133) ;
- en cas de défaillance de l'un des composants 221, 222, 223, 231 de l'unité électronique de pilotage 220 ou du capteur de position du rotor, le freinage peut être assuré par l'activation du circuit de freinage 232, ou du circuit de freinage 233, ou des deux circuits de freinage 232, 233, du circuit de freinage 131, ou du circuit de freinage 132, ou des deux circuits de freinage 131, 132 (en variante, on peut également faire intervenir le circuit de freinage 133).

Le dispositif est agencé pour utiliser les lignes de commande 100, 200 également en fonction des performances recherchées notamment en matière de freinage. L'unité électronique de commande 110, 210 est ici agencée pour activer les circuits de freinage en fonction de la vitesse de rotation et du couple du moteur. On comprend en effet que plus des circuits de freinage sont activés et plus le freinage du rotor sera important.

L'ensemble de commande comprend des interconnexions entre les lignes de commande 100, 200. Il est ainsi possible de raccorder tout ou partie des composants de la ligne de commande 100 avec des composants de la ligne de commande 200.

Les unités de pilotage 120, 220 sont ici reliées entre elles pour échanger des informations de statut actif/passif.

On comprend que l'invention autorise de nombreuses variantes.

On peut par exemple utiliser un seul capteur permettant de détecter une des deux positions de la jambe 2 ou une vitesse de déplacement de la jambe 2 entre ses deux positions (on le désignera capteur système dans la suite). Ce capteur système peut être raccordé soit à l'une ou aux deux unités de commande 110, 210, soit à l'une ou aux deux unités de pilotage 120, 220, soit directement au moteur 50. Dans ce cas, le capteur système, situé au niveau du train, enverrait l'information position/vitesse du train directement au circuit de freinage 133 ou 233. Ces circuits de freinage mettraient en œuvre des conditions (réalisées en Hardware ou Software) d'activation des commutateurs des circuits de freinage 133 ou 233, en fonction des informations ou du statut du capteur système.

Ainsi, en combinaison avec l'unique capteur système, on utilisera la sortie du capteur de position du rotor qui permet de compter les nombres de tours du rotor en surveillant le courant et la tension d'alimentation du moteur 50. Cette solution est avantageuse car elle permet d'économiser un capteur, tout en autorisant la gestion des butées de position de la jambe de l'atterrisseur. La communication entre les deux unités de pilotage 120, 220 permet de redonder l'information courant et position du moteur. On notera que, en cas de perte d'alimentation, il reste possible de connaître la position du rotor du moteur 50. En effet, les alimentations haute tension des unités de pilotage électronique 120 et 220 sont de préférence ségréguées et indépendantes, permettant de conserver l'information position du rotor en cas de perte d'une de ces alimentations. De préférence encore, l'alimentation haute tension de la première ligne de commande 100 est de structure différente de l'alimentation haute tension de la deuxième ligne de commande 200.

En variante, on peut utiliser deux capteurs systèmes permettant de détecter chacune des deux positions de la jambe 2. L'un des capteurs systèmes est relié à la ligne de commande 100 et l'autre capteur système est relié à la ligne de commande 200 : les capteurs systèmes peuvent être reliés aux unités de commande ou aux unités de pilotage ; ou le premier capteur système peut être relié par exemple à l'unité de commande 110 et le deuxième capteur système à l'unité de pilotage 220 ; ou tout autre configuration. Il n'est plus nécessaire de compter le nombre de tours du rotor au sein de chaque unité électronique de pilotage 120, 220 ni de surveiller les paramètres électriques du moteur 50. L'avantage est que l'on peut connaître la position du rotor même en cas de perte d'alimentation.

De la même manière, on peut choisir d'avoir un ou plusieurs circuits de freinage par ligne de commande 100, 200, et/ou d'avoir ou pas des circuits de freinage déportés dans le moteur 50.

La présence des circuits de freinage déportés dans le moteur permet un sous-dimensionnement des circuits de freinage dans l'unité de pilotage. On utilise, pour le circuit de freinage dans le moteur, la capacité d'absorption thermique du moteur. L'inconvénient de cette solution est qu'elle nécessite de disposer de suffisamment de place au voisinage du moteur pour y placer l'électronique de puissance.

Selon différentes variantes, on peut avoir une liaison entre les unités électroniques de pilotage 120, 220 pour améliorer la disponibilité de la fonction de freinage globale. Il n'y a pas de ségrégation dure entre les deux unités de pilotage et pas de réelle indépendance des deux unités de pilotage. Il faut donc prendre plus de précautions pour s'assurer que les deux unités de pilotage ne soient pas simultanément actives lors de la commande du moteur 50. En revanche, pour assurer la gestion du freinage, les deux unités de pilotage peuvent être simultanément actives.

Si on prévoit une absence de communication entre les deux unités de pilotage, il y a une ségrégation dure et une indépendance forte entre les deux unités de pilotage. Concernant les stratégies de commande, on comprend que :
- chaque unité de commande peut avoir un état actif dans lequel c'est elle qui assure la commande de l'unité de pilotage alimentant le moteur et un état passif dans lequel c'est l'autre unité de commande qui assure la commande de l'unité de pilotage alimentant le moteur ;
- chaque unité de pilotage peut avoir un état actif dans lequel c'est elle qui assure l'alimentation du moteur et un état passif dans lequel c'est l'autre unité de pilotage qui assure l'alimentation du moteur ;
- chaque enroulement peut avoir un état activé dans lequel il est alimenté et un état désactivé dans lequel il n'est pas alimenté).

Le système en mode de commande peut présenter les états suivants :

**[Table 1]**

| **Stratégies possibles** | **SYSTEME_1** | **SYSTEME_2** | **SOUS-SYSTEME_1** | **SOUS-SYSTEME_2** | **Enroulement 1** | **Enroulement 2** |
|---|---|---|---|---|---|---|
| *Stratégie 1* | *Passif* | *Passif* | *Passif* | *Passif* | *Désactivé* | *Désactivé* |
| *Stratégie 2* | *Actif* | *Passif* | *Passif* | *Passif* | *Désactivé* | *Désactivé* |
| *Stratégie 3* | *Actif* | *Passif* | *Actif* | *Passif* | *Activé* | *Désactivé (a) Ou Activé (b)* |
| *Stratégie 4* | *Actif* | *Passif* | *Actif* | *Actif* | *Activé* | *Activé* |
| *Stratégie 6* | *Actif* | *Passif* | *Passif* | *Actif* | *Désactivé (a) Ou Activé (b)* | *Activé* |
| *Stratégie 7* | *Passif* | *Actif* | *Passif* | *Passif* | *Désactivé* | *Désactivé* |
| *Stratégie 8* | *Passif* | *Actif* | *Actif* | *Passif* | *Activé* | *Désactivé (a) Ou Activé (b)* |
| *Stratégie 9* | *Passif* | *Actif* | *Actif* | *Actif* | *Activé* | *Activé* |

Concernant le freinage, on comprend que, chaque ligne de commande comportant trois circuits de freinage pouvant chacun avoir deux états (activé, désactivé), il y a 64 états possibles du système en mode de freinage selon que l'on utilise un, deux, trois, quatre, cinq ou six circuits de freinage.

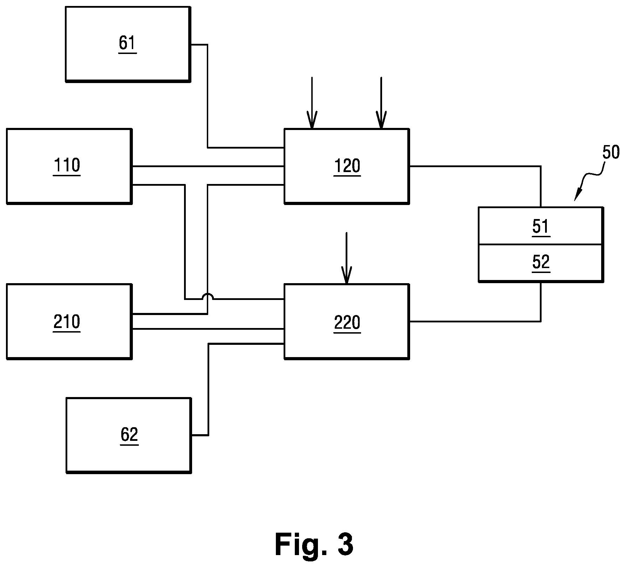

On a représenté à la figure 3, un mode de réalisation particulier de l'invention comprenant :
- un moteur 50 synchrone à aimants permanents, comprenant comme précédemment un premier enroulement triphasé à couplage en étoile 51 et un deuxième enroulement triphasé à couplage en étoile 52 et incorporant un premier capteur de position du rotor du côté du premier enroulement 51 et un deuxième capteur de position du rotor du côté du deuxième enroulement 52 ;
- une première unité de commande 110 qui détermine la vitesse souhaitée de déplacement de la jambe 2 et élabore un signal de commande correspondant pour commander le déploiement et la rétraction de la jambe 2 en mode normal ;
- une deuxième unité de commande 210 comportant une manette permettant au pilote de commander uniquement la rétraction de la jambe 2 dans un mode d'urgence, la deuxième unité de commande 210 étant agencée pour déterminer la vitesse souhaitée de déplacement de la jambe 2 lors de la rétraction et élaborer un signal de commande correspondant ;
- une première unité de pilotage 120 qui détermine les paramètres d'alimentation du premier enroulement 51 du moteur 50 en fonction du signal de commande reçu de la première unité de commande 110 et en fonction du signal provenant d'un premier capteur 61 ;
- une deuxième unité de pilotage 220 qui détermine les paramètres d'alimentation du deuxième enroulement 52 du moteur 50 en fonction du signal de commande reçu de la deuxième unité de commande 210 et en fonction du signal provenant d'un deuxième capteur 62 ;
- le premier capteur 61 est un capteur de position de la jambe 2 et est relié à la première unité de pilotage 120 ;
- le deuxième capteur 62 est un capteur de position de la jambe 2 et est relié à la deuxième unité de pilotage 220.

La première unité de commande 110 est reliée à la première unité de pilotage 120 pour lui transmettre le signal de commande de vitesse et à la deuxième unité de pilotage 220 pour lui transmettre une instruction de mise dans un état passif pour ce qui est de la commande du moteur.

La deuxième unité de commande 210 est reliée à la deuxième unité de pilotage 220 pour lui transmettre le signal de commande de vitesse et à la première unité de pilotage 120 pour lui transmettre une instruction de mise dans un état passif pour ce qui est de la commande du moteur.

Pour ce qui concerne le freinage :
a) L'unité de pilotage 110 (respectivement 210) est en charge d'envoyer un ordre de freinage à l'unité de commande 120 (respectivement 220) après consolidation de l'état haut niveau du système global train.
   Cet état haut niveau prend en compte les variables suivantes :
   - statuts des unités de pilotage,
   - statuts des unités de commande,
   - statuts du train,
   - statuts/ordres de commande des systèmes hauts niveaux tels que les commandes provenant du tableau de bord l'aéronef.
b) L'unité de commande 120 (respectivement 220) est en charge de sélectionner et de commander les circuits de freinage dans la première ligne de commande 100 (respectivement dans la deuxième ligne de commande 200).
   Cette sélection se fera suite à une consolidation :
   - des ordres de freinage provenant de l'ensemble 110, 100 (respectivement 210, 200),
   - du statut de l'unité de commande 120 (respectivement 220),
   - du statut et/ou des informations provenant des capteurs systèmes et à destination de l'unité de commande 120 (respectivement 220),
   - du statut de l'ensemble comprenant le premier enroulement 51, le troisième circuit de freinage 133, le faisceau du premier enroulement 51 (respectivement de l'ensemble comprenant le deuxième enroulement 52, le troisième circuit de freinage 233, le faisceau du deuxième enroulement 52).
L'unité de commande 120 (respectivement 220) munie de ces éléments, d'une table de vérité qui lui est propre, ainsi que de sa loi de pilotage sera à même de piloter les différents circuits de freinage.

L'unité de commande 120 (respectivement 220) est agencée pour :
- sélectionner et piloter de manière directe et autonome les circuits de freinage de la première ligne de commande (respectivement la deuxième ligne de commande) .
- piloter de manière indirecte et autonome, ou non, des circuits de freinage dans la deuxième ligne de commande (respectivement la première ligne de commande) .

Bien entendu, l'invention n'est pas limitée aux modes et variantes de réalisation décrits mais englobe toute variante entrant dans le champ de l'invention telle que définie par les revendications.

En particulier, la structure du dispositif peut être différente de celle décrite.

L'unité de commande et la partie commande de l'unité de pilotage peuvent être physiquement distinctes ou être regroupées dans un même calculateur exécutant un programme informatique dont une partie met en œuvre une boucle de rétroaction lente et une partie met en œuvre une boucle de rétroaction rapide.

Chaque unité électronique de pilotage peut comprendre un ou plusieurs calculateurs, par exemple un affecté à la commande et un affecté à la surveillance pour avoir une ségrégation entre ces deux fonctions. Les calculateurs peuvent comprendre par exemple un processeur, un microcontrôleur, un circuit intégré de type ASIC, un FPGA... Le dispositif peut comprendre plus de deux lignes de commande. Dans un exemple qui ne fait pas partie de l'objet des revendications, on comprend que le moteur avec deux enroulements à couplage en étoile est équivalent à un ensemble de deux moteurs partageant un même rotor. L'invention est applicable à des ensembles de plus de deux moteurs.

## Revendications

1. Dispositif d'actionnement (10) d'une jambe (2) d'atterrisseur (1) d'aéronef, comprenant un ensemble électronique de commande et un actionneur comprenant un moteur (50) électrique triphasé relié à l'ensemble de commande, le dispositif étant agencé pour autoriser également un déploiement gravitaire de la jambe (2), dans lequel le moteur (50) comprend un stator ayant au moins un premier enroulement triphasé (51) à couplage en étoile et un deuxième enroulement triphasé (52) à couplage en étoile, dans lequel l'ensemble électronique de commande comprend une première ligne de commande (100) reliée au premier enroulement (51) et une deuxième ligne de commande (200) reliée au deuxième enroulement (52), dans lequel chaque ligne de commande (100, 200) comprend une unité de commande (110, 210) pour élaborer une instruction de commande de haut niveau, une unité de pilotage (120, 220) pour élaborer une instruction de pilotage de bas niveau à partir de l'instruction de commande de haut niveau, et au moins un circuit de freinage (131, 132, 133, 231, 232, 233) pour freiner le moteur (50) lors du déploiement gravitaire de la jambe (2) en exploitant une énergie produite par le moteur (50), et dans lequel le dispositif est agencé pour utiliser les lignes de commande (100, 200) en fonction d'une disponibilité des composants de chaque ligne de commande (100, 200).

2. Dispositif selon la revendication 1, dans lequel au moins une des unités de pilotage (120, 220) est agencée pour commander le déploiement gravitaire.

3. Dispositif selon la revendication 1, dans lequel chaque ligne de commande (100, 200) comprend une pluralité de circuits de freinage (131, 132, 133, 231, 232, 233) sélectivement activables en fonction de l'énergie produite par le moteur (50) lors du déploiement gravitaire de la jambe (2) .

4. Dispositif selon la revendication 2, dans lequel l'unité de pilotage (120, 220) de chaque ligne (100, 200) est agencée pour sélectionner le ou les circuits de freinage (131, 132, 133, 231, 232, 233) à activer.

5. Dispositif selon la revendication 2 ou 3, dans lequel l'un des circuits de freinage (131, 132, 133, 231, 232, 233) de chaque ligne de commande (100, 200) est déporté au voisinage du moteur (50).

6. Dispositif selon l'une quelconque des revendications précédentes, dans lequel le moteur (50) comprend au moins un capteur de position de son rotor.

7. Dispositif selon l'une quelconque des revendications précédentes, comprenant au moins un capteur de position de la jambe (2), ledit capteur étant relié à au moins l'une des lignes de commande (100, 200).

8. Dispositif selon l'une quelconque des revendications précédentes, comprenant des interconnexions entre les lignes de commande (100, 200).

9. Dispositif selon la revendication 7, dans lequel les unités de pilotage (120, 220) sont reliées entre elles pour échanger des informations de statut.

10. Dispositif selon l'une quelconque des revendications précédentes, dans lequel au moins une des lignes de commande (100, 200) comprend une unité de surveillance (123, 223) reliée aux autres composants de ladite ligne de commande (100, 200).

11. Dispositif selon l'une quelconque des revendications précédentes, dans lesquels les unités de commande (110, 210) et les unités de pilotage (120, 220) sont agencées pour pouvoir être commandées dans un état actif et dans un état passif.

12. Atterrisseur (1) d'aéronef, comprenant une jambe (2) articulée pour pivoter entre une position rentrée et une position sortie et un dispositif d'actionnement (10) de la jambe (2) entre sa position rentrée et sa position sortie, le dispositif d'actionnement (10) étant selon l'une quelconque des revendications précédentes.

13. Aéronef comprenant un atterrisseur (1) d'aéronef selon la revendication précédente.

## Patentansprüche

1. Betätigungsvorrichtung (10) zur Betätigung eines Beins (2) eines Luftfahrzeug-Fahrwerks (1), umfassend eine elektronische Steueranordnung und einen Aktuator, der einen mit der Steueranordnung verbundenen Dreiphasen-Elektromotor (50) umfasst, wobei die Vorrichtung dafür ausgelegt ist, ein schwerkraftbedingtes Ausfahren des Beins (2) zuzulassen, wobei der Motor (50) einen Stator mit zumindest einer ersten Dreiphasenwicklung (51) mit Sternschaltung und einer zweiten Dreiphasenwicklung (52) mit Sternschaltung aufweist, wobei die elektronische Steueranordnung eine mit der ersten Wicklung (51) verbundene erste Steuerleitung (100) und eine mit der zweiten Wicklung (52) verbundene zweite Steuerleitung (200) umfasst, wobei jede Steuerleitung (100, 200) umfasst: eine Steuereinheit (110, 210) zur Erstellung eines High-Level-Steuerbefehls, eine Ansteuerungseinheit (120, 220) zur Erstellung eines Low-Level-Ansteuerungsbefehls aus dem High-Level-Steuerbefehl, und zumindest eine Bremsschaltung (131, 132, 133, 231, 232, 233) zur Abbremsung des Motors (50) während des schwerkraftbedingten Ausfahrens des Beins (2) unter Nutzung einer von dem Motor (50) erzeugten Energie, und wobei die Vorrichtung dafür ausgelegt ist, die Steuerleitungen (100, 200) in Abhängigkeit von einer Verfügbarkeit der Komponenten jeder Steuerleitung (100, 200) zu verwenden.

2. Vorrichtung nach Anspruch 1, wobei zumindest eine der Ansteuerungseinheiten (120, 220) dafür ausgelegt ist, das schwerkraftbedingte Ausfahren anzusteuern.

3. Verfahren nach Anspruch 1, wobei jede Steuerleitung (100, 200) eine Mehrzahl von Bremsschaltungen (131, 132, 133, 231, 232, 233) umfasst, die in Abhängigkeit von der von dem Motor (50) erzeugten Energie während des schwerkraftbedingten Ausfahrens des Beins (2) selektiv aktivierbar sind.

4. Vorrichtung nach Anspruch 2, wobei die Ansteuerungseinheit (120, 220) jeder Steuerleitung (100, 200) dafür ausgelegt ist, die eine oder die mehreren zu aktivierenden Bremsschaltungen (131, 132, 133, 231, 232, 233) auszuwählen.

5. Vorrichtung nach Anspruch 2 oder 3, wobei eine der Bremsschaltungen (131, 132, 133, 231, 232, 233) jeder Steuerleitung (100, 200) zu der Umgebung des Motors (50) hin ausgelagert ist.

6. Vorrichtung nach einem der vorhergehenden Ansprüche, wobei der Motor (50) zumindest einen Positionssensor zur Positionserfassung seines Rotors umfasst.

7. Vorrichtung nach einem der vorhergehenden Ansprüche, umfassend zumindest einen Positionssensor zur Positionserfassung des Beins (2), wobei der Sensor mit zumindest einer der Steuerleitungen (100, 200) verbunden ist.

8. Vorrichtung, nach einem der vorhergehenden Ansprüche, umfassend Zusammenschaltungen der Steuerleitungen (100, 200) untereinander.

9. Vorrichtung nach Anspruch 7, wobei die Ansteuerungseinheiten (120, 220) untereinander verbunden sind, um Statusinformationen auszutauschen.

10. Vorrichtung nach einem der vorhergehenden Ansprüche, wobei zumindest eine der Steuerleitungen (100, 200) eine Überwachungseinheit (123, 223) umfasst, die mit den anderen Komponenten der Steuerleitung (100, 200) verbunden ist.

11. Vorrichtung nach einem der vorhergehenden Ansprüche, wobei die Steuereinheiten (110, 210) und die Ansteuerungseinheiten (120, 220) dafür ausgelegt sind, in einem aktiven Zustand und in einem passiven Zustand steuerbar zu sein.

12. Luftfahrzeug-Fahrwerk (1), umfassend ein gelenkig befestigtes Bein (2), das zwischen einer eingezogenen Position und einer ausgefahrenen Position verschwenkbar ist, und eine Betätigungsvorrichtung (10) zur Betätigung des Beins (2) zwischen seiner eingezogenen Position und seiner ausgefahrenen Position, wobei die Betätigungsvorrichtung (10) nach einem der vorhergehenden Ansprüche ausgebildet ist.

13. Luftfahrzeug, umfassend ein Luftfahrzeug-Fahrwerk (1) nach dem vorhergehenden Anspruch.

## Claims

1. A device for actuating an aircraft undercarriage leg, the device comprising an electronic controller and an actuator comprising a three-phase electric motor connected to the electronic controller, the device also being arranged to authorize gravity deployment of the leg, wherein the motor includes a stator having at least first and second star-coupled three-phase windings, wherein the electronic controller comprises a first control channel connected to the first three-phase winding, and a second control channel connected to the second three-phase winding, wherein each control channel comprises a control unit for generating a high-level control instruction, a driver unit for generating a low-level driver instruction from the high-level control instruction, and at least one braking circuit for braking the motor during gravity deployment of the leg by making use of energy produced by the motor, and wherein the device is arranged to use the control channels as a function of the availabilities of the components of each channel.

2. A device according to claim 1, wherein at least one of the driver units is arranged to control gravity deployment.

3. A device according to claim 1, wherein each control channel includes a plurality of braking circuits that can be activated selectively as a function of the energy produced by the motor during gravity deployment of the leg.

4. A device according to claim 2, wherein the driver unit of each channel is arranged to select the braking circuit(s) that is/are to be activated.

5. A device according to claim 2 or claim 3, wherein one of the braking circuits of each control channel is offset into the vicinity of the motor.

6. A device according to any preceding claim, wherein the motor includes at least one sensor for sensing the position of its rotor.

7. A device according to any preceding claim, including at least one sensor for sensing the position of the leg, said sensor being connected to at least one of the control channels.

8. A device according to any preceding claim, including interconnections between the control channels.

9. A device according to claim 7, wherein the driver units are connected together to exchange status information.

10. A device according to any preceding claim, wherein at least one of the control channels includes a monitoring unit connected to the other components of said control channel.

11. A device according to any preceding claim, wherein the control units and the driver units can be controlled to occupy an active state or a passive state.

12. An aircraft undercarriage comprising both a leg that is hinged to pivot between a retracted position and an extended position and also an actuator device for actuating the leg between its retracted position and its extended position, the actuator device being in accordance with any preceding claim.

13. An aircraft including an aircraft undercarriage according to the preceding claim.
